# EUROPÄISCHE PATENTSCHRIFT

(11) **EP 3 133 331 B1**
(45) Veröffentlichungstag und Bekanntmachung des Hinweises auf die Patenterteilung: **18.04.2018**
(21) Anmeldenummer: 16174123.6
(22) Anmeldetag: 13.06.2016
(51) Int. Cl.: F16P 3/08, F16P 3/12, G05B 9/03, F16P 3/14

(54) **SICHERHEITSSYSTEM UND VERFAHREN ZUR ÜBERWACHUNG**
SAFETY SYSTEM AND METHOD FOR MONITORING
SYSTEME DE SECURITE ET PROCEDE DE SURVEILLANCE

(30) Priorität: 13.08.2015 DE 102015113364
(43) Veröffentlichungstag der Anmeldung: 22.02.2017
(73) Patentinhaber: SICK AG, 79183 Waldkirch (DE)
(72) Erfinder: Pfister, Michael, 79199 Kirchzarten (DE); Dreher, Felix, 79350 Sexau (DE); Klingelhöfer, Christian, 79110 Freiburg (DE)

(56) Entgegenhaltungen:
- EP-A1- 2 282 106
- EP-A2- 1 329 662
- DE-U1- 20 103 828
- DE-U1- 29 920 715

## Beschreibung

Die vorliegende Erfindung betrifft ein Sicherheitssystem nach dem Oberbegriff von Anspruch 1 und ein Verfahren zur Überwachung nach dem Oberbegriff von Anspruch 6.

Beispielsweise dienen Lichtgitter für die Sicherheitstechnik zur Absicherung von gefahrbringenden Maschinen, wie Gesenkbiegepressen, Stanzmaschinen, Schneidwerkzeugen, Schweißrobotern und dergleichen. Das Lichtgitter bzw. Sicherheitslichtgitter schützt dabei vor unzulässigem Eindringen in Gefahrenbereiche, indem das durch das Sicherheitslichtgitter aufgespannte Schutzfeld auf Verletzung durch ein Objekt überwacht wird. Wird das Schutzfeld verletzt, gibt das Sicherheitslichtgitter ein entsprechendes Sicherheitsschaltsignal aus, das z. B. ein Abschaltsignal für die gefahrbringende Maschine sein kann. Derartige Lichtgitter als Sicherheitssensoren müssen zuverlässig arbeiten und deshalb hohe Sicherheitsanforderungen erfüllen, beispielsweise die Gerätenorm EN61496 für berührungslos wirkende Schutzeinrichtungen (BWS) und in der Applikation die Norm EN13849 für Maschinensicherheit.

Die Sicherheitslichtgitter bestehen in der Regel aus zwei optischen Einheiten, wobei in der einen optischen Einheit eine Reihe Lichtsender und in der anderen optischen Einheit eine entsprechende Reihe Lichtempfänger angeordnet ist, so dass einzelne Lichtsender und Lichtempfänger sich paarweise gegenüberliegen und zwischen sich das Schutzfeld des Sicherheitslichtgitters bilden. Bei Unterbrechung wenigstens eines Lichtstrahls, was durch einen Lichtempfänger detektiert wird, erfolgt die Ausgabe des Sicherheitsschaltsignals.

Wenn berührungslos wirkende Schutzeinrichtungen (Abkürzung BWS), wie beispielsweise Lichtgitter hintertretbar sind, müssen abhängig von einem zu erzielenden Sicherheitsniveau weitere Schutzmaßnahmen zur Absicherung verwendet werden, wie z. B. ein Hintertretschutz, der ein unerkanntes Hintertreten einer Primärabsicherung unmöglich macht. Bei Sicherheits-Lichtvorhängen sieht eine Anwendung häufig so aus, dass eine berührungslos wirkende Schutzeinrichtung vertikal als primäre Schutzeinrichtung angebracht wird und eine weitere horizontale als Hintertretschutz. Wenn nun Werkstoffe, z. B. Sägespäne aus der Anlage herausfallen, kann es sein, dass die horizontale BWS darauf anspricht, d. h. eine Verletzung ihres Schutzfeldes erkennt und die Anlage daraufhin abschaltet. Diese störenden Abschaltungen und damit verbundenen Maschinenstillstände sollen möglichst vermieden werden.

Die DE 201 03 828 U1 offenbart eine Sicherheitseinrichtung zur Überwachung eines Durchgangs, durch den sich Gegenstände in einer Richtung bewegen, mit einer den Durchgang sichernden ersten Lichtschrankenanordnung, die bei einer Auslösung Sicherheitsmittel aktiviert, mit einer in der Bewegungsrichtung der Gegenstände vor dem Durchgang angeordneten zweiten Lichtschrankenanordnung, die bei einer Auslösung die erste Lichtschrankenanordnung und/oder die Sicherheitsmittel deaktiviert, und mit einer diese Deaktivierung nach dem Passieren der zweiten Lichtschrankenanordnung durch einen Gegenstand für eine vorgebbare Zeit aufrecht erhaltenden Zeitschalteinrichtung.

Die EP 1 329 662 A2 offenbart ein Sicherheitsgitter umfassend eine Mehrzahl von Licht emittierenden Dioden, die in einer sich auf einer Seite einer Passage befindenden Dioden tragenden Säule angeordnet sind und parallele Strahlen erzeugen zum Nachweis durch jeweilige Fotodioden, die in einer auf der gegenüberliegenden Seite der Passage befindlichen Fotodioden tragenden Säule angeordnet sind, deren Ausgangssignale in eine Verarbeitungseinheit eingespeist werden, wobei das Sicherheitsgitter außerdem nahe den Säulen innerhalb eines unsicheren Bereiches angeordnete fotoelektrische Sensoren umfasst und mindestens ein Paar von Lichtemittern aufweist, die aufeinander folgenden einer Seite der Passage entlang des Weges eines durch die Passage hindurchtretenden Gegenstands angeordnet sind und Strahlen erzeugen, die durch ein Paar zugehöriger Lichtempfänger nachgewiesen werden, die sich auf der gegenüberliegenden Seite der Passage befinden und deren Ausgangssignale in die Verarbeitungseinheit eingespeist werden.

Eine Aufgabe der Erfindung besteht somit darin, ein Sicherheitssystem bereitzustellen, welches robuster gegenüber Störungen ist und ohne externe Steuerungslogik auskommt.

Die Aufgabe wird gemäß Anspruch 1 gelöst durch ein Sicherheitssystem mit wenigstens einem ersten Sicherheitssensor zur Überwachung eines Primärgefahrenbereichs, wobei der erste Sicherheitssensor eine erste Steuer- und Auswerteeinheit aufweist, und mit wenigstens einem zweiten Sicherheitssensor zur Überwachung eines Sekundärgefahrenbereichs, wobei der zweite Sicherheitssensor eine zweite Steuer-und Auswerteeinheit aufweist, wobei der Sekundärgefahrenbereich nur durch den Primärgefahrenbereich erreichbar ist, wobei der erste Sicherheitssensor und der zweite Sicherheitssensor elektrisch oder elektronisch verbunden sind, wobei der erste Sicherheitssensor oder der zweite Sicherheitssensor ausgebildet ist mindestens ein Objektfeststellungssignal auszugeben, wobei eine Auswertung des ersten Sicherheitssensors und des zweiten Sicherheitssensors durch die erste Steuer- und Auswerteeinheit und/oder durch die zweite Steuer- und Auswerteeinheit erfolgt, wobei der Primärgefahrenbereich und der Sekundärgefahrenbereich auswertbar ist und wenn kein Objekt im Primärgefahrenbereich und kein Objekt im Sekundärgefahrenbereich vorhanden ist, anschließend nur noch so lange der Primärgefahrenbereich ausgewertet wird, bis in diesem ein Objekt festgestellt wird.

Die Aufgabe wird weiter gelöst durch ein Verfahren zur Überwachung eines Primärgefahrenbereichs mittels wenigstens eines ersten Sicherheitssensors, wobei der erste Sicherheitssensor eine erste Steuer- und Auswerteeinheit aufweist, und Überwachung eines Sekundärgefahrenbereichs mittels wenigstens eines zweiten Sicherheitssensors, wobei der zweite Sicherheitssensor eine zweite Steuer- und Auswerteeinheit aufweist, wobei der Sekundärgefahrenbereich nur durch den Primärgefahrenbereich erreicht wird, wobei der erste Sicherheitssensor und der zweite Sicherheitssensor elektronisch verbunden werden, wobei der erste Sicherheitssensor oder der zweite Sicherheitssensor mindestens ein Objektfeststellungssignal ausgibt, wobei der erste Sicherheitssensor und der zweite Sicherheitssensor durch die erste Steuer- und Auswerteeinheit und/oder durch die zweite Steuer- und Auswerteeinheit ausgewertet werden, wobei der Primärgefahrenbereich und der Sekundärgefahrenbereich ausgewertet werden und wenn kein Objekt im Primärgefahrenbereich und kein Objekt im Sekundärgefahrenbereich vorhanden ist, anschließend nur noch so lange der Primärgefahrenbereich ausgewertet wird, bis in diesem ein Objekt festgestellt wird.

Gemäß der Erfindung erfolgt eine gemeinsame Auswertung der ersten und zweiten Sicherheitssensoren in einer der beiden Auswerteeinheiten bzw. in beiden Auswerteeinheiten der Sicherheitssensoren. Somit ist keine zusätzliche externe Logikauswertung wie beispielsweise eine externe speicherprogrammierbare Steuerung mehr notwendig.

Gemäß der Erfindung ist es lediglich erforderlich, das Objektfeststellungssignal an eine Maschine oder Anlage weiterzuleiten, um die Maschine bzw. Anlage stoppen zu können. Die gesamte Funktionslogik ist durch die erste und/oder zweite Auswerteeinheit gebildet. Die Funktionslogik wird bereits fertig bereitgestellt, so dass keine zusätzliche Programmierung mehr notwendig wird.

Das Objektfeststellungssignal ist vorzugsweise ein sicheres Objektfeststellungssignal. Das Objektfeststellungssignal wird beispielsweise auf zwei Sicherheitsschaltausgängen ausgegeben. Ein Sicherheitsschaltausgang wird auch als OSSD bezeichnet. Die Abkürzung OSSD steht für Output Safety Switching Device und ist beispielsweise durch einen Halbleiterausgang gebildet, der eine Schaltspannung von 24 V aufweist.

Das Objektfeststellungssignal kann jedoch auch als sicheres Signal über eine Datenleitung, beispielsweise eine Busleitung, beispielsweise eine Ethernet-Leitung, ein ASI (Aktor Sensor Interface), einen Interbus, einen Profibus oder eine sichere Busleitung, beispielsweise die sicheren Varianten von ASI-Bus, Interbus oder beispielsweise Profibus ausgegeben bzw. übertragen werden. Weiter kann das Objektfeststellungssignal auch über ein EFI-Bus (Enhanced Funktion Interface) der Firma SICK ausgegeben werden, welches ein sicheres Bussystem ist.

Gemäß der Erfindung ist es lediglich notwendig, dass der erste Sicherheitssensor seinen Status dem zweiten Sicherheitssensor übermittelt und/oder der zweite Sicherheitssensor seinen Status dem ersten Sicherheitssensor übermittelt. Beispielsweise ist es ausreichend, wenn ein Schutzfeldstatus oder ein Status der sicheren Ausgänge übermittelt wird.

Bei den Sicherheitssensoren kann es sich um verschiedene bzw. unterschiedliche Sicherheitssensoren handeln.

In Weiterbildung der Erfindung sind der erste Sicherheitssensor und der zweite Sicherheitssensor elektronisch durch eine Kommunikationsverbindung verbunden. Beispielsweise können die oben genannten Übertragungsmöglichkeiten zwischen dem ersten und dem zweiten Sicherheitssensor vorgesehen sein.

Durch die elektronische Kommunikationsverbindung zwischen dem ersten und zweiten Sicherheitssensor können interne Auswerteergebnisse dem jeweils anderen Sicherheitssensor zur Verfügung gestellt werden, so dass jede der Steuer- und Auswerteeinheiten über alle notwendigen Eingangsinformationen der beiden Sensoren verfügt, um die zweikanaligen Sicherheitsausgänge ansteuern zu können.

Bei der elektronischen Kommunikationsverbindung kann es sich beispielsweise um eine Busverbindung bzw. eine sichere Busverbindung handeln.

Gemäß der Erfindung wird der Primärgefahrenbereich und der Sekundärgefahrenbereich ausgewertet und wenn kein Objekt im Primärgefahrenbereich und kein Objekt im Sekundärgefahrenbereich vorhanden ist, wird nur noch der Primärgefahrenbereich ausgewertet.

Der zweite Sicherheitssensor für den Sekundärgefahrenbereich ist dann quasi inaktiv solange der erste Sicherheitssensor kein Objekt detektiert und sich zuvor kein Objekt im Sekundärgefahrenbereich mehr befand. Das bedeutet, dass der zweite Sicherheitssensor nur dann inaktiv ist, wenn zuvor der erste Sicherheitssensor und der zweite Sicherheitssensor kein Objekt mehr detektieren. Dadurch ist es möglich, dass der zweite Sicherheitssensor Störobjekte, wie beispielsweise Späne oder ein Funkenflug, einer Verarbeitungsmaschine nicht detektiert und damit keine störende Abschaltung erfolgt. Diese Maßnahme führt zu einer höheren Verfügbarkeit des Sicherheitssystems.

Die Sicherheit des Sicherheitssystems wird dabei nicht beeinträchtigt, da erstens der erste Sicherheitssensor immer aktiv ist und zweitens der Sekundärgefahrenbereich nur durch den Primärgefahrenbereich erreichbar ist, welcher durch den ersten Sicherheitssensor überwacht wird. Bei einem Eingriff in den Primärgefahrenbereich wird ein Objektfeststellungssignal erzeugt, wodurch eine gefahrbringende Bewegung abgeschaltet wird.

In Weiterbildung der Erfindung ist eine Rücksetzfunktion vorgesehen, wobei die Rücksetzfunktion aktivierbar ist, wenn kein Objekt im Primärgefahrenbereich und kein Objekt im Sekundärgefahrenbereich vorhanden ist.

Eine Rücksetzfunktion stellt sicher, dass nach einem Stillstand der Maschine, aufgrund einer Objektedetektion des Sicherheitssensors, kein automatisches Anlaufen der Maschine erfolgen kann, wenn das Objekt nicht mehr im Detektionsbereich der Sicherheitssensoren ist. Es muss zunächst eine Taste, insbesondere eine Resettaste betätigt werden, um eine Freigabe des Sicherheitssystems zu signalisieren. Die Resettaste ist dabei direkt mit dem Sicherheitssensor verbunden. Gemäß der Weiterbildung der Erfindung ist die Rücksetzfunktion aktivierbar, wenn kein Objekt im Primärgefahrenbereich und kein Objekt im Sekundärgefahrenbereich detektiert wird.

In Weiterbildung der Erfindung ist eine Rücksetzfunktion vorgesehen, wobei die Rücksetzfunktion anforderbar ist, wenn kein Objekt im Primärgefahrenbereich und kein Objekt im Sekundärgefahrenbereich vorhanden ist.

Ein notwendiges Rücksetzen wird durch eine Anzeige signalisiert. Die Anzeige kann dabei direkt in der Resettaste integriert sein. Gemäß der Weiterbildung der Erfindung wird die Anzeige zur Anforderung der Rücksetzfunktion durchgeführt, wenn kein Objekt im Primärgefahrenbereich und kein Objekt im Sekundärgefahrenbereich detektiert wird.

In Weiterbildung der Erfindung sind der erste Sicherheitssensor und/oder der zweite Sicherheitssensor ein Lichtgitter, eine Mehrstrahllichtschranke, ein Laserscanner, ein Sicherheitsschalter oder eine Trittmatte.

Wird beispielsweise der zweite Sicherheitssensor durch eine berührungslos wirkende Schutzeinrichtung gebildet, wie beispielsweise durch ein Lichtgitter oder durch ein Laserscanner, so kann der erste Sicherheitssensor auch durch einen Zaun mit einer Tür und einem Sicherheitsschalter an der Tür gebildet sein.

Beispielsweise kann ein Zaun auch eine Öffnung und eine Tür aufweisen, wobei die Öffnung mit einem zweiten Sicherheitssensor, beispielsweise einem Lichtgitter, abgesichert ist und die Tür mit einem ersten Sicherheitssensor abgesichert ist, beispielsweise einem Sicherheitsschalter oder einem Sicherheitskontaktschalter.

Beispielsweise können auch Anwendungen mit drei oder mehr Sicherheitssensoren realisiert werden. Beispielsweise ist ein erster Sicherheitssensor für den Primärgefahrenbereich vorgesehen und ein zweiter und dritter Sicherheitssensor zur Absicherung jeweils eines zugehörigen ersten und zweiten Sekundärgefahrenbereichs. Beispielsweise ist als erster Sicherheitssensor ein Laserscanner vorgesehen, als zweiter Sensor ein Lichtgitter, bzw. ein Sicherheitslichtgitter und als dritter Sensor eine Trittmatte.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sicherheitssystem mit einem ersten Sicherheitssensor und einem zweiten Sicherheitssensor;
- Figur 2 bis 4: jeweils ein Ablaufdiagramm.

In den nachfolgenden Figuren sind identische Teile mit identischen Bezugszeichen versehen.

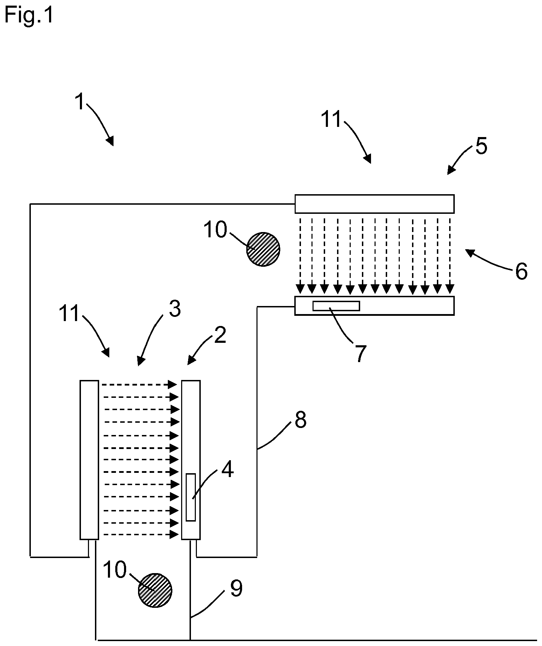

Figur 1 zeigt ein Sicherheitssystem 1 bzw. ein Verfahren zur Überwachung mit wenigstens einem ersten Sicherheitssensor 2 zur Überwachung eines Primärgefahrenbereichs 3, wobei der erste Sicherheitssensor 2 eine erste Steuer- und Auswerteeinheit 4 aufweist, und mit wenigstens einem zweiten Sicherheitssensor 5 zur Überwachung eines Sekundärgefahrenbereichs 6, wobei der zweite Sicherheitssensor 5 eine zweite Steuer- und Auswerteeinheit 7 aufweist, wobei der Sekundärgefahrenbereich 6 nur durch den Primärgefahrenbereich 3 erreichbar ist, wobei der erste Sicherheitssensor 2 und der zweite Sicherheitssensor 5 elektrisch oder elektronisch verbunden sind, wobei der erste Sicherheitssensor 2 oder der zweite Sicherheitssensor 5 ausgebildet sind mindestens ein Objektfeststellungssignal auszugeben, wobei eine Auswertung des ersten Sicherheitssensors 2 und des zweiten Sicherheitssensors 5 durch die erste Steuer- und Auswerteeinheit 4 und/oder durch die zweite Steuer- und Auswerteeinheit 7 erfolgen.

Gemäß Figur 1 erfolgt die gemeinsame Auswertung des ersten Sicherheitssensors 2 und des zweiten Sicherheitssensors 5 in einer der beiden Steuer- und Auswerteeinheiten 4 oder 7 bzw. in beiden Steuer- und Auswerteeinheiten 4 und 7 der Sicherheitssensoren.

Gemäß Figur 1 ist es lediglich erforderlich, das Objektfeststellungssignal an eine Maschine weiterzuleiten, um die Maschine stoppen zu können. Die gesamte Funktionslogik ist durch die erste und/oder zweite Auswerteeinheit 4, 7 gebildet. Die Funktionslogik wird bereits fertig bereitgestellt, so dass keine zusätzliche Programmierung mehr notwendig wird.

Das Objektfeststellungssignal ist vorzugsweise ein sicheres Objektfeststellungssignal. Das Objektfeststellungssignal wird beispielsweise auf zwei Sicherheitsschaltausgängen ausgegeben.

Das Objektfeststellungssignal kann jedoch auch als sicheres Signal über eine Datenleitung, beispielsweise eine Busleitung oder eine sichere Busleitung übertragen werden. Weiter kann das Objektfeststellungssignal auch über ein EFI-Bus der Firma SICK ausgegeben werden, welches ein sicheres Bussystem ist.

Gemäß Figur 1 ist es lediglich notwendig, dass der erste Sicherheitssensor 2 seinen Status dem zweiten Sicherheitssensor 5 übermittelt und/oder der zweite Sicherheitssensor 5 seinen Status dem ersten Sicherheitssensor 2 übermittelt. Beispielsweise ist es ausreichend, wenn ein Schutzfeldstatus oder ein Status der sicheren Ausgänge übermittelt wird.

Gemäß Figur 1 ist der erste Sicherheitssensor 2 und der zweite Sicherheitssensor 5 elektronisch, beispielsweise durch eine Kommunikationsverbindung 8 verbunden.

Durch die elektronische Kommunikationsverbindung 8 zwischen dem ersten und zweiten Sicherheitssensor 2 und 5 können interne Auswerteergebnisse dem jeweils anderen Sicherheitssensor zur Verfügung gestellt werden, so dass jede der Steuer- und Auswerteeinheiten 4, 7 über alle notwendigen Eingangsinformationen der beiden Sicherheitssensoren 2, 5 verfügt, um die zweikanaligen Sicherheitsschaltausgänge 9 ansteuern zu können.

Gemäß Figur 1 ist es lediglich erforderlich, den zweikanaligen Sicherheitsschaltausgang 9 mit einer Anlage bzw. Maschine zu verbinden. Bei der elektronischen Kommunikationsverbindung 8 kann es sich beispielsweise um eine Busverbindung bzw. eine sichere Busverbindung handeln. Jedoch sind auch andere Kommunikationsverbindungen denkbar.

Bei den Sicherheitssensoren kann es sich um verschiedene bzw. unterschiedliche Sicherheitssensoren handeln. Der erste Sicherheitssensor 2 und/oder der zweite Sicherheitssensor 5 ist gemäß Figur 1 ein Lichtgitter 11 bzw. eine Mehrstrahllichtschranke. Es kann jedoch ebenso ein Laserscanner, ein Sicherheitsschalter oder eine Trittmatte vorgesehen sein.

Wird beispielsweise der zweite Sicherheitssensor 5 durch eine berührungslos wirkende Schutzeinrichtung gebildet, wie beispielsweise gemäß Figur 1 durch ein Lichtgitter 11 oder beispielsweise durch einen Laserscanner, so kann der erste Sicherheitssensor 2 auch durch einen Zaun mit einer Tür und einem Sicherheitsschalter an der Tür gebildet sein.

In Weiterbildung wird der Primärgefahrenbereich 3 und der Sekundärgefahrenbereich 6 ausgewertet und wenn kein Objekt 10 im Primärgefahrenbereich 3 und kein Objekt 10 im Sekundärgefahrenbereich 6 vorhanden ist, wird anschließend nur noch so lange der Primärgefahrenbereich 3 ausgewertet, bis in diesem ein Objekt festgestellt wird.

Der zweite Sicherheitssensor 5 für den Sekundärgefahrenbereich 6 ist quasi inaktiv, solange der erste Sicherheitssensor 2 kein Objekt 10 detektiert und sich zuvor kein Objekt im Sekundärgefahrenbereich mehr befand. Das bedeutet, dass der zweite Sicherheitssensor nur dann inaktiv ist, wenn zuvor der erste Sicherheitssensor 2 und der zweite Sicherheitssensor 5 kein Objekt mehr detektieren. Dadurch ist es möglich, dass der zweite Sicherheitssensor 5 Störobjekte, wie beispielsweise Späne oder ein Funkenflug einer Verarbeitungsmaschine nicht detektiert und damit keine störende Abschaltung erfolgt. Diese Maßnahme führt zu einer höheren Verfügbarkeit des Sicherheitssystems.

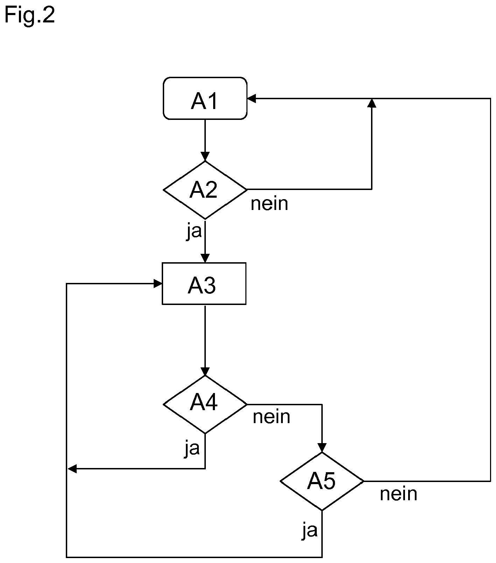

Figur 2 zeigt ein Ablaufdiagramm hierzu.

Gemäß Schritt A1 ist kein Objektfeststellungssignal über die Sicherheitsschaltausgänge für die Anlage gesetzt. Dies wird durch eine Anzeige mit der Farbe ,Grün' signalisiert.

Im nächsten Schritt A2 wird geprüft, ob eine Abschaltbedingung des ersten Sicherheitssensors vorliegt, also ob eine Abschaltbedingung der Primärabsicherung vorliegt. Beispielsweise, ob ein Objekt im Schutzfeld des ersten Sicherheitssensors vorliegt.

Falls dies nicht der Fall ist, wird zurück zu Schritt A1 verzweigt. Fall dies der Fall ist, wird zu Schritt A3 verzweigt.

Im Schritt A3 wird ein Objektfeststellungssignal über die Sicherheitsschaltausgänge ausgegeben und eine angeschlossene Maschine oder Anlage abgeschaltet. Dies wird durch eine Anzeige mit der Farbe ,Rot' signalisiert.

Im nachfolgenden Schritt A4 wird weiter geprüft, ob eine Abschaltbedingung des ersten Sicherheitssensors vorliegt, also ob eine Abschaltbedingung der Primärabsicherung vorliegt. Beispielsweise, ob ein Objekt im Schutzfeld des ersten Sicherheitssensors vorliegt. Ist dies der Fall, wird zurückverzweigt zu Schritt A3. Ist dies nicht der Fall, wird weiter verzweigt zu Schritt A5.

Gemäß dem Schritt A5 wird geprüft, ob eine Abschaltbedingung des zweiten Sicherheitssensors vorliegt, also ob eine Abschaltbedingung der Sekundärabsicherung vorliegt. Beispielsweise, ob ein Objekt im Schutzfeld des zweiten Sicherheitssensors vorliegt. Ist dies der Fall, wird zu Schritt A3 verzweigt. Ist dies nicht der Fall, wird weiter zu Schritt A1 verzweigt.

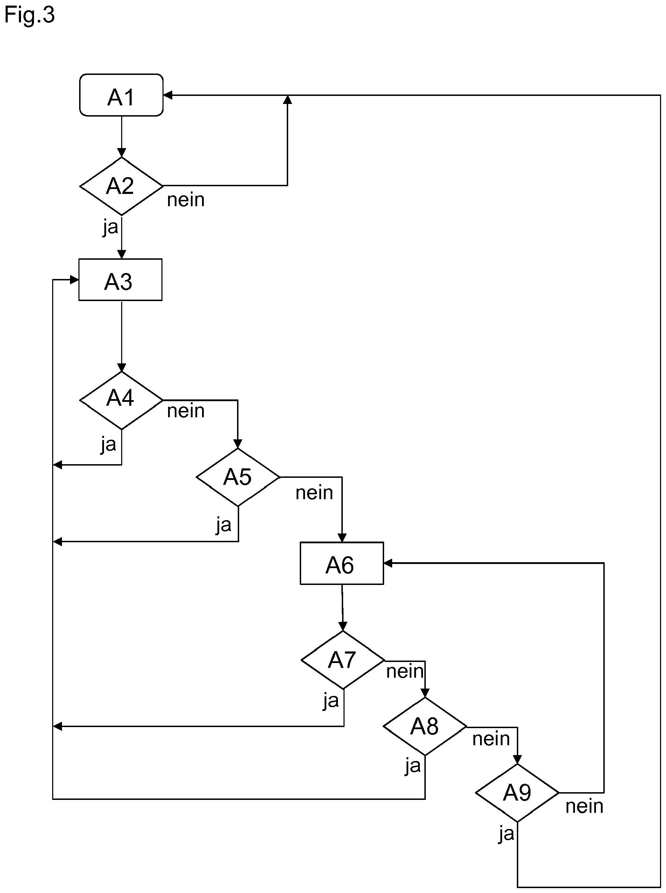

Gemäß Figur 3 ist eine Rücksetzfunktion vorgesehen, wobei die Rücksetzfunktion aktivierbar ist, wenn kein Objekt im Primärgefahrenbereich und kein Objekt im Sekundärgefahrenbereich vorhanden ist.

Eine Rücksetzfunktion stellt sicher, dass nach einem Stillstand der Maschine aufgrund einer Objektedetektion des Sicherheitssensors kein automatisches Anlaufen der Maschine erfolgen kann, wenn das Objekt nicht mehr im Detektionsbereich des Sicherheitssensors ist. Es muss zunächst eine Taste, insbesondere eine Resettaste betätigt werden, um eine Freigabe des Sicherheitssystems zu signalisieren. Die Resettaste ist dabei direkt mit dem Sicherheitssensor verbunden. Gemäß der Weiterbildung der Erfindung ist die Rücksetzfunktion aktivierbar, wenn kein Objekt im Primärgefahrenbereich und kein Objekt im Sekundärgefahrenbereich detektiert wird.

Figur 3 zeigt ein Ablaufdiagramm hierzu. Dabei sind die Schritte A1 bis A5 nahezu identisch zu Figur 2. Hierzu wird auch auf die Beschreibung zu Figur 2 verwiesen. Im Unterschied zu Figur 2 wird, falls die Bedingung in Schritt A5 nicht erfüllt ist, zu Schritt A6 verzweigt.

Gemäß Schritt A6 bleibt das Objektfeststellungssignal der Sicherheitsschaltausgänge weiterhin noch gesetzt, so dass das Abschaltsignal für Anlage bzw. Maschine noch gesetzt ist. Weiter ist eine Rücksetzfunktion aktiviert und das Rücksetzen ist erforderlich. Dies wird auch kurz als ,Reset Required' bezeichnet.

Liegt im nächsten Schritt A7 eine Abschaltbedingung des ersten Sicherheitssensors, also der Primärabsicherung vor, so wird weiter zu Schritt 7 verzweigt. Liegt in Schritt A7 keine Abschaltbedingung bzw. Detektion eines Objektes des ersten Sicherheitssensors vor, so wird zu Schritt A8 verzweigt.

Gemäß dem Schritt A8 wird geprüft, ob eine Abschaltbedingung des zweiten Sicherheitssensors vorliegt, also ob eine Abschaltbedingung der Sekundärabsicherung vorliegt. Beispielsweise, ob ein Objekt im Schutzfeld des zweiten Sicherheitssensors vorliegt. Ist dies der Fall, wird zu Schritt A3 verzweigt. Ist dies nicht der Fall, wird weiter zu Schritt A9 verzweigt.

Im Schritt A9 wird geprüft, ob ein gültiges Rücksetzsignal erkannt wurde. Ist kein gültiges Rücksetzsignal erkannt worden, wird zurück zu Schritt A6 verzweigt. Ist ein gültiges Rücksetzsignal erkannt worden, wird zurück zu Schritt A1 verzweigt.

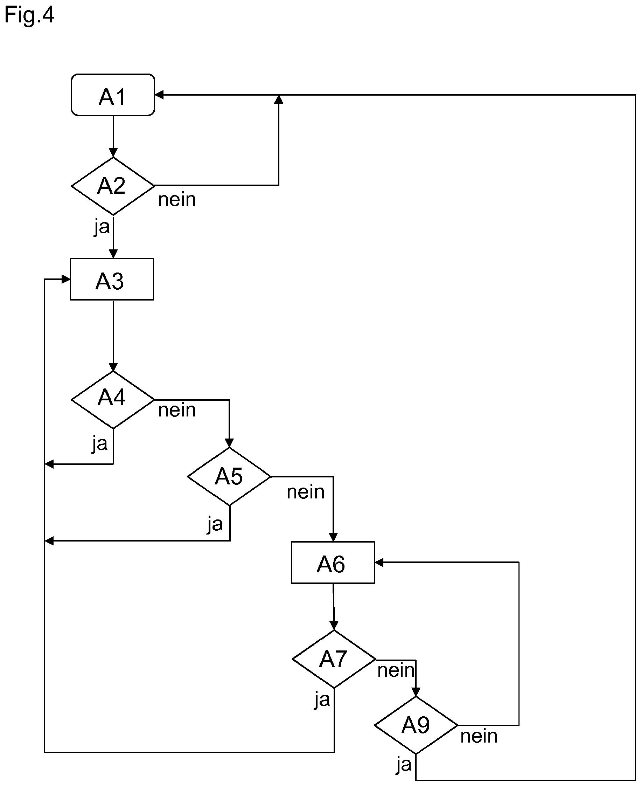

Gemäß Figur 4 ist eine Rücksetzfunktion vorgesehen, wobei die Rücksetzfunktion anforderbar ist, wenn kein Objekt im Primärgefahrenbereich vorhanden ist.

Ein notwendiges Rücksetzen wird durch eine Anzeige signalisiert. Die Anzeige kann dabei direkt in der Resettaste integriert sein. Gemäß der Weiterbildung der Erfindung wird die Anzeige zur Anforderung der Rücksetzfunktion durchgeführt, wenn kein Objekt im Primärgefahrenbereich und kein Objekt im Sekundärgefahrenbereich detektiert wird.

Figur 4 zeigt ein Ablaufdiagramm hierzu. Im Unterschied zu Figur 3 ist bei Figur 4 Schritt A8 nicht vorhanden. Es wird auf die Beschreibung zu Figur 3 verwiesen.

Bezugszeichen:
1 Sicherheitssystem
2 erster Sicherheitssensor
3 Primärgefahrenbereich
4 erste Steuer- und Auswerteeinheit
5 zweiter Sicherheitssensor
6 Sekundärgefahrenbereich
7 zweite Steuer- und Auswerteeinheit
8 Kommunikationsverbindung
9 zweikanaliger Sicherheitsschaltausgang
10 Objekt
11 Lichtgitter
A1 bis A9 Schritte im Ablaufdiagramm

## Patentansprüche

1. Sicherheitssystem mit wenigstens einem ersten Sicherheitssensor (2) zur Überwachung eines Primärgefahrenbereichs (3), wobei der erste Sicherheitssensor (2) eine erste Steuer- und Auswerteeinheit (4) aufweist,
und mit wenigstens einem zweiten Sicherheitssensor (5) zur Überwachung eines Sekundärgefahrenbereichs (6), wobei der zweite Sicherheitssensor (5) eine zweite Steuer- und Auswerteeinheit (7) aufweist,
wobei der Sekundärgefahrenbereich (6) nur durch den Primärgefahrenbereich (3) erreichbar ist,
wobei der erste Sicherheitssensor (2) und der zweite Sicherheitssensor (5) elektrisch oder elektronisch verbunden sind,
wobei der erste Sicherheitssensor (2) oder der zweite Sicherheitssensor (5) ausgebildet sind mindestens ein Objektfeststellungssignal auszugeben,
wobei eine Auswertung des ersten Sicherheitssensors (2) und des zweiten Sicherheitssensors (5) durch die erste Steuer- und Auswerteeinheit (4) und/oder durch die zweite Steuer- und Auswerteeinheit (7) erfolgt, **dadurch gekennzeichnet, dass** der Primärgefahrenbereich (3) und der Sekundärgefahrenbereich (6) auswertbar ist und wenn kein Objekt (10) im Primärgefahrenbereich (3) und kein Objekt (10) im Sekundärgefahrenbereich (6) vorhanden ist, anschließend nur noch so lange der Primärgefahrenbereich (3) ausgewertet wird, bis in diesem ein Objekt festgestellt wird.

2. Sicherheitssystem nach Anspruch 1, **dadurch gekennzeichnet, dass** der erste Sicherheitssensor (2) und der zweite Sicherheitssensor (5) elektronisch durch eine Kommunikationsverbindung (8) verbunden sind.

3. Sicherheitssystem nach einem der vorhergehenden Ansprüche, **dadurch gekennzeichnet, dass** eine Rücksetzfunktion vorgesehen ist, wobei die Rücksetzfunktion aktivierbar ist, wenn kein Objekt (10) im Primärgefahrenbereich (3) und kein Objekt im Sekundärgefahrenbereich (6) vorhanden ist.

4. Sicherheitssystem nach einem der vorhergehenden Ansprüche, **dadurch gekennzeichnet, dass** eine Rücksetzfunktion vorgesehen ist, wobei die Rücksetzfunktion anforderbar ist, wenn kein Objekt (10) im Primärgefahrenbereich (3) und kein Objekt (10) im Sekundärgefahrenbereich (6) vorhanden ist.

5. Sicherheitssystem nach einem der vorhergehenden Ansprüche, **dadurch gekennzeichnet, dass** der erste Sicherheitssensor (2) und/oder der zweite Sicherheitssensor (5) ein Lichtgitter (11), eine Mehrstrahllichtschranke, ein Laserscanner, ein Sicherheitsschalter oder eine Trittmatte ist.

6. Verfahren zur Überwachung eines Primärgefahrenbereichs (3) mittels wenigstens eines ersten Sicherheitssensors (2), wobei der erste Sicherheitssensor (2) eine erste Steuer- und Auswerteeinheit (4) aufweist,
und Überwachung eines Sekundärgefahrenbereichs (6) mittels wenigstens eines zweiten Sicherheitssensors (5), wobei der zweite Sicherheitssensor (5) eine zweite Steuer- und Auswerteeinheit (7) aufweist,
wobei der Sekundärgefahrenbereich (6) nur durch den Primärgefahrenbereich (3) erreicht wird,
wobei der erste Sicherheitssensor (2) und der zweite Sicherheitssensor (5) elektrisch oder elektronisch verbunden werden,
wobei der erste Sicherheitssensor (2) oder der zweite Sicherheitssensor (5) mindestens ein Objektfeststellungssignal ausgeben,
wobei der erste Sicherheitssensor (2) und der zweite Sicherheitssensor (5) durch die erste Steuer- und Auswerteeinheit (4) und/oder durch die zweite Steuer- und Auswerteeinheit (7) ausgewertet werden, **dadurch gekennzeichnet, dass** der Primärgefahrenbereich (3) und der Sekundärgefahrenbereich (6) ausgewertet werden und wenn kein Objekt (10) im Primärgefahrenbereich (3) und kein Objekt (10) im Sekundärgefahrenbereich (6) vorhanden ist, anschließend nur noch so lange der Primärgefahrenbereich (3) ausgewertet wird, bis in diesem ein Objekt festgestellt wird.

7. Verfahren nach Anspruch 6, **dadurch gekennzeichnet, dass** der erste Sicherheitssensor (2) und der zweite Sicherheitssensor (5) elektronisch durch eine Kommunikationsverbindung (8) kommunizieren.

8. Verfahren nach einem der vorhergehenden Ansprüche 6 bis 7, **dadurch gekennzeichnet, dass** eine Rücksetzfunktion vorgesehen ist, wobei die Rücksetzfunktion aktiviert wird, wenn kein Objekt (10) im Primärgefahrenbereich (3) und kein Objekt (10) im Sekundärgefahrenbereich (6) vorhanden ist.

9. Verfahren nach einem der vorhergehenden Ansprüche 6 bis 8, **dadurch gekennzeichnet, dass** eine Rücksetzfunktion vorgesehen ist, wobei die Rücksetzfunktion angefordert wird, wenn kein Objekt (10) im Primärgefahrenbereich (3) und kein Objekt (10 im Sekundärgefahrenbereich (6) vorhanden ist.

10. Verfahren nach einem der vorhergehenden Ansprüche 6 bis 9, **dadurch gekennzeichnet, dass** der erste Sicherheitssensor (2) und/oder der zweite Sicherheitssensor (5) ein Lichtgitter (11), eine Mehrstrahllichtschranke, ein Laserscanner, ein Sicherheitsschalter oder eine Trittmatte ist.

## Claims

1. A safety system having at least one first safety sensor (2) for monitoring a primary hazard zone (3), wherein the first safety sensor (2) has a first control and evaluation unit (4);
and having at least one second safety sensor (5) for monitoring a secondary hazard zone (6), wherein the second safety sensor (5) has a second control and evaluation unit (7);
wherein the secondary hazard zone (6) can only be reached through the primary hazard zone (3);
wherein the first safety sensor (2) and the second safety sensor (5) are electrically or electronically connected;
wherein the first safety sensor (2) or the second safety sensor (5) are configured to output at least one object determination signal;
and wherein an evaluation of the first safety sensor (2) and of the second safety sensor (5) takes place by the first control and evaluation unit (4) and/or by the second control and evaluation unit (7), **characterized in that** the primary hazard zone (3) and the secondary hazard zone (6) can be evaluated and, if no object (10) is present in the primary hazard zone (3) and if no object (10) is present in the secondary hazard zone (6), subsequently the primary hazard zone (3) is only evaluated for so long until an object is detected therein.

2. A safety system in accordance with claim 1, **characterized in that** the first safety sensor (2) and the second safety sensor (5) are electronically connected by a communication connection (8).

3. A safety system in accordance with one of the preceding claims,
**characterized in that** a reset function is provided, with the reset function being activatable when no object (10) is present in the primary hazard zone (3) and no object is present in the secondary hazard zone (6).

4. A safety system in accordance with any one of the preceding claims,
**characterized in that** a reset function is provided, with the reset function being able to be requested when no object (10) is present in the primary hazard zone (3) and no object (10) is present in the secondary hazard zone (6).

5. A safety system in accordance with any one of the preceding claims,
**characterized in that** the first safety sensor (2) and/or the second safety sensor (5) is/are a light grid (11), a multi-beam light barrier, a laser scanner, a safety switch or a safety shut-off mat.

6. A method of monitoring a primary hazard zone (3) by means of at least one first safety sensor (2), wherein the first safety sensor (2) has a first control and evaluation unit (4);
and of monitoring a secondary hazard zone (6) by means of at least one second safety sensor (5), wherein the second safety sensor (5) has a second control and evaluation unit (7),
wherein the secondary hazard zone (6) is only reached through the primary hazard zone (3);
wherein the first safety sensor (2) and the second safety sensor (5) are electrically or electronically connected;
wherein the first safety sensor (2) or the second safety sensor (5) output at least one object determination signal;
wherein the first safety sensor (2) and the second safety sensor (5) are evaluated by the first control and evaluation unit (4) and/or by the second control and evaluation unit (7), **characterized in that** the primary hazard zone (3) and the secondary hazard zone (6) are evaluated and, if no object (10) is present in the primary hazard zone (3) and if no object (10) is present in the secondary hazard zone (6), subsequently the primary hazard zone (3) is only evaluated for so long until an object is detected therein.

7. A method in accordance with claim 6, **characterized in that** the first safety sensor (2) and the second safety sensor (5) communicate electronically through a communication connection (8).

8. A method in accordance with one of the preceding claims 6 to 7,
**characterized in that** a reset function is provided, with the reset function being actuated when no object (10) is present in the primary hazard zone (3) and no object (10) is present in the secondary hazard zone (6).

9. A method in accordance with any one of the preceding claims 6 to 8,
**characterized in that** a reset function is provided, with the reset function being requested when no object (10) is present in the primary hazard zone (3) and no object (10) is present in the secondary hazard zone (6).

10. A method in accordance with any one of the preceding claims 6 to 9,
**characterized in that** the first safety sensor (2) and/or the second safety sensor (5) is/are a light grid (11), a multi-beam light barrier, a laser scanner, a safety switch or a safety shut-off mat.

## Revendications

1. Système de sécurité comportant au moins un premier capteur de sécurité (2) pour surveiller une zone de danger primaire (3), le premier capteur de sécurité (2) étant pourvu d'une première unité de commande et d'évaluation (4), et comportant au moins un second capteur de sécurité (5) pour surveiller une zone de danger secondaire (6), le second capteur de sécurité (5) étant pourvu d'une seconde unité de commande et d'évaluation (7), dans lequel
la zone de danger secondaire (6) n'est accessible que par la zone de danger primaire (3),
le premier capteur de sécurité (2) et le second capteur de sécurité (5) sont connectés par voie électrique ou électronique,
le premier capteur de sécurité (2) ou le second capteur de sécurité (5) est réalisé pour émettre au moins un signal de constatation d'objet,
une évaluation du premier capteur de sécurité (2) et du second capteur de sécurité (5) s'effectue par la première unité de commande et d'évaluation (4) et/ou par la seconde unité de commande et d'évaluation (7),
**caractérisé en ce que** la zone de danger primaire (3) et la zone de danger secondaire (6) sont évaluables et, lorsqu'aucun objet (10) n'est présent dans la zone de danger primaire (3) et qu'aucun objet (10) n'est présent dans la zone de danger secondaire (6), la zone de danger primaire (3) n'est ensuite évaluée plus que jusqu'à ce qu'un objet soit constaté dans celle-ci.

2. Système de sécurité selon la revendication 1, **caractérisé en ce que** le premier capteur de sécurité (2) et le second capteur de sécurité (5) sont connectés par voie électronique par une liaison de communication (8).

3. Système de sécurité selon l'une des revendications précédentes, **caractérisé en ce que** il est prévu une fonction de remise à zéro, la fonction de remise à zéro étant activable lorsqu'aucun objet (10) n'est présent dans la zone de danger primaire (3) et qu'aucun objet n'est présent dans la zone de danger secondaire (6).

4. Système de sécurité selon l'une des revendications précédentes, **caractérisé en ce que** il est prévu une fonction de remise à zéro, la fonction de remise à zéro pouvant être requise lorsqu'aucun objet (10) n'est présent dans la zone de danger primaire (3) et qu'aucun objet (10) n'est présent dans la zone de danger secondaire (6).

5. Système de sécurité selon l'une des revendications précédentes, **caractérisé en ce que** le premier capteur de sécurité (2) et/ou le second capteur de sécurité (5) est une grille lumineuse (11), une barrière lumineuse multifaisceaux, un scanneur laser, un commutateur de sécurité ou un tapis de commutation.

6. Procédé pour surveiller une zone de danger primaire (3) au moyen d'au moins un premier capteur de sécurité (2), le premier capteur de sécurité (2) étant pourvu d'une première unité de commande et d'évaluation (4), et pour surveiller une zone de danger secondaire (6) au moyen d'au moins un second capteur de sécurité (5), le second capteur de sécurité (5) étant pourvu d'une seconde unité de commande et d'évaluation (7), dans lequel la zone de danger secondaire (6) n'est accessible que par la zone de danger primaire (3),
le premier capteur de sécurité (2) et le second capteur de sécurité (5) sont connectés par voie électrique ou électronique,
le premier capteur de sécurité (2) ou le second capteur de sécurité (5) émet au moins un signal de constatation d'objet,
le premier capteur de sécurité (2) et le second capteur de sécurité (5) sont évalués par la première unité de commande et d'évaluation (4) et/ou par la seconde unité de commande et d'évaluation (7),
**caractérisé en ce que** la zone de danger primaire (3) et la zone de danger secondaire (6) sont évaluées et, lorsqu'aucun objet (10) n'est présent dans la zone de danger primaire (3) et qu'aucun objet (10) n'est présent dans la zone de danger secondaire (6), la zone de danger primaire (3) n'est ensuite évaluée plus que jusqu'à ce qu'un objet soit constaté dans celle-ci.

7. Procédé selon la revendication 6, **caractérisé en ce que** le premier capteur de sécurité (2) et le second capteur de sécurité (6) communiquent par voie électronique par une liaison de communication (8).

8. Procédé selon l'une des revendications précédentes 6 à 7, **caractérisé en ce que** il est prévu une fonction de remise à zéro, la fonction de remise à zéro étant activée lorsqu'aucun objet (10) n'est présent dans la zone de danger primaire (3) et qu'aucun objet (10) n'est présent dans la zone de danger secondaire (6).

9. Procédé selon l'une des revendications précédentes 6 à 8, **caractérisé en ce que** il est prévu une fonction de remise à zéro, la fonction de remise à zéro étant requise lorsqu'aucun objet (10) n'est présent dans la zone de danger primaire (3) et qu'aucun objet (10) n'est présent dans la zone de danger secondaire (6).

10. Procédé selon l'une des revendications précédentes 6 à 9, **caractérisé en ce que** le premier capteur de sécurité (2) et/ou le second capteur de sécurité (5) est une grille lumineuse (11), une barrière lumineuse multifaisceaux, un scanneur laser, un commutateur de sécurité ou un tapis de commutation.
